# EUROPEAN PATENT APPLICATION

(11) **EP 1 361 147 A1**
(43) Date of publication of application: **12.11.2003**
(21) Application number: 02425288.4
(22) Date of filing: 09.05.2002
(51) Int. Cl.: B62J 19/00

(54) **Protective device for the bodywork of motorized vehicles**

(71) Applicant: Spenillo, Francesco, 61015 Novafeltria (PU) (IT); Ciavatta, Pier Paolo, 47893 Borgo Maggiore (SM)
(72) Inventor: Spenillo, Francesco, 61015 Novafeltria (PU) (IT); Ciavatta, Pier Paolo, 47893 Borgo Maggiore (SM)
(74) Representative: Provvisionato, Paolo

(57) **Abstract**

A protective device for the bodywork of motorized vehicles comprises at least one awning (1), made of material which can be wound up, and a roller (2), provided with means (8) for fastening to the bodywork of a vehicle (3), said awning (1) being provided at a first end (1a) with means (7) for rigid and removable fastening to the bodywork of the vehicle (3) and being able to be wound onto the roller (2) at a second end (1b) thereof.

## Description

The present invention relates to a protective device for the bodywork of motorized vehicles.

One of the main reasons for deterioration of the state of the bodywork of motorized vehicles is undoubtedly the exposure to atmospheric agents.

However, whilst covered vehicles such as cars, buses and lorries only suffer aesthetic damage as a result, in the case of uncovered vehicles, such as motorcycles and convertible cars, or cars intended for certain types of competition, drawbacks also arise which prevent use thereof and may affect the efficiency thereof.

With particular reference to motorcycles, it is easy to imagine the inconvenience caused when finding the vehicle with the seat completely wet due to unexpected rain or literally red-hot due to the heat of the summer sun.

At present no systems exist for avoiding the drawbacks arising from these situations, apart from makeshift covers which at best offer no guarantee that they will be found in the same condition in which they were left, since they are devoid of stable fixing means.

The object of the present invention is therefore that of eliminating the drawbacks mentioned above. This is achieved with a protective awning which can be fastened to the vehicle part to be protected.

The main advantage obtained by means of the present invention consists essentially in the fact that the same solution can be used both for bad weather and to avoid overheating.

Moreover, it may be used as an advertising medium, since it has a large visible free surface.

Finally, and in particular in the case of use in racing vehicles, the invention allows underlying mechanical, electrical and electronic parts to be kept hidden from prying eyes.

Further advantages and characteristic features of the invention will become clearer from the detailed description which follows, provided with reference to the accompanying drawings which shows a non-limiting example of embodiment thereof, in which:

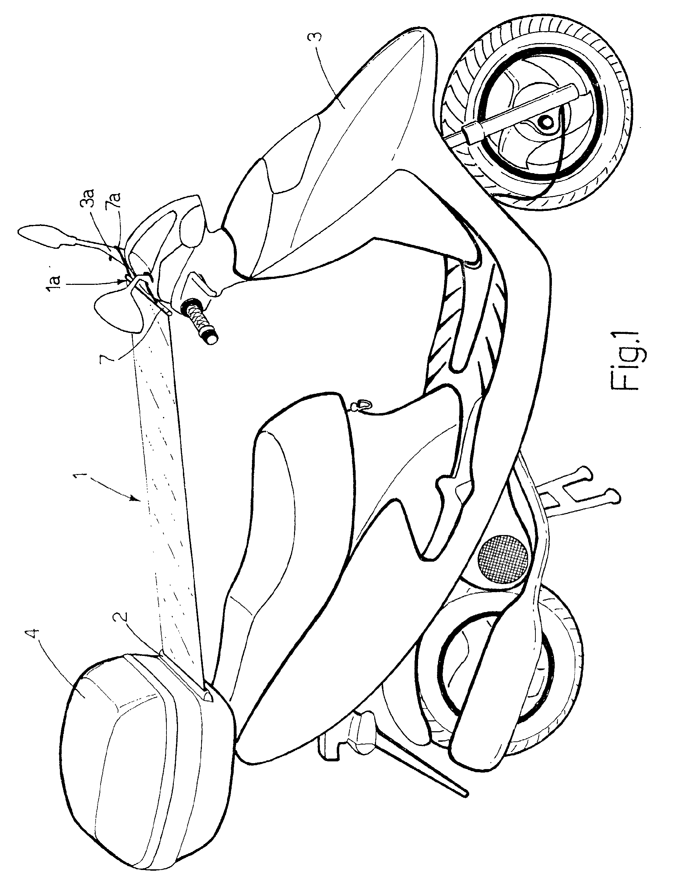

- Figure 1 shows an overall perspective view of the invention during use thereof;

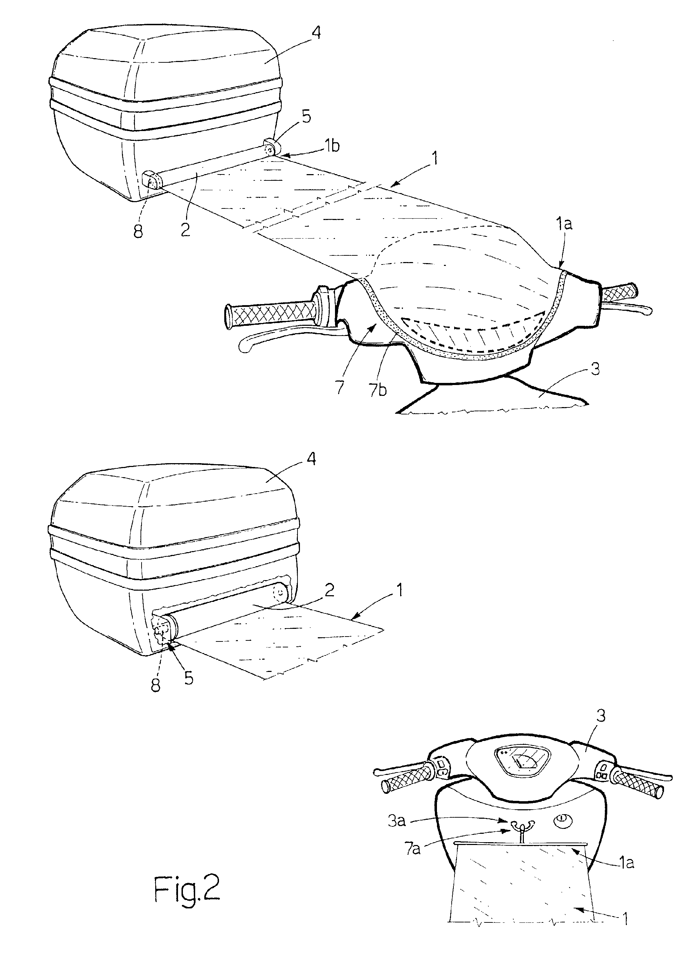

- Figure 2 shows some constructional details of the invention.

As can be seen from the figures, the invention relates to a protective device for the bodywork of motorized vehicles.

It comprises at least one awning (1), made of material which can be wound up and provided at one end (1a) with means (7) for rigid and removable fastening to the bodywork of a vehicle (3), and a roller (2), provided with means (8) for fastening to the bodywork of a vehicle (3), on which roller (2) the awning (1) is wound up at a second end (1b) thereof.

The means (7) for fastening the awning (1) to the bodywork of the vehicle (3) may be formed in many ways which are equivalent to each other: the figures show two exemplary solutions which use, respectively, a rapid-engagement mechanism (7a), which can also be used as a grip for unwinding the awning (1) and which complements a similar mechanism (3a) fixed to the vehicle (3), and an adhesive surface (7b), which can be associated directly with the vehicle (3).

Although these solutions have been illustrated in connection with a motorcycle, they may also be applied to any other motorized vehicle.

The means (8) for fastening the roller (2) to the bodywork of a vehicle (3) may also assume a wide variety of forms, both depending on the vehicle (3) and on the moment in which the device is applied to the said vehicle (3).

In the example illustrated, in view of the fact that nearly all motorcycles are provided with a rear travel box (4), the most advantageous and most convenient design consists in preparing a special seat inside the travel box (4). The latter, which is generally designed to contain a helmet, is in this case provided with fastening means (5) which complement the fastening means (8) of the roller (2), so as to fix stably the awning (1) to the vehicle (3).

However, if necessary, the roller (2) may also be fastened to the outside of the travel box (4) on models which are not pre-equipped at the factory or which have a travel box (4) with dimensions too small for housing the roller (2).

In both cases, the means (8) for fastening the roller (2) to the bodywork of the vehicle (3) are preferably located at its ends and consist in special shaping of the latter. In a corresponding manner, the fastening means (5) associated with the travel box (4) may comprise seats or locating elements shaped so as to complement the ends of the roller (2).

Although not shown, there exist numerous other possibilities for associating the device in question with the bodywork of a vehicle (3). In the case of motorcycles, the said device may be fastened to a rear pannier, to a backrest, to a front travel box or directly to the chassis, for example underneath the seat. In other examples, both in the case of cars and in the case of motorcycles, it may be fastened to any point of the bodywork and may undergo rotation and/or displacement before allowing unwinding of the awning (1).

The shape, length and flexibility of the awning (1) to be used may in each case be determined depending on the various requirements, which may relate to the size of the vehicle part (3) to be protected, the adherence of the awning (1) to the surface which it covers, the direction in which it must be unwound, and other factors.

In some applications, it may be convenient to use several awnings (1) at the same time, in series with each other, or also arranged in a manner corresponding to the surface to be protected. For example, it could be possible to use two aligned awnings (1) which are unwound from a single central roller (2) and are fastened to two opposite points of the bodywork of a vehicle (3), or two awnings which are unwound from two rollers (2) fastened to the bodywork of the vehicle (3) and which are fixed to the vehicle (3) at an intermediate point between them, or also several awnings (1), each fastened to an associated roller (2) and positioned in an arbitrary manner on the surface of the vehicle (3).

The invention thus conceived may be subject to numerous modifications and variations, all falling within the scope of the inventive idea. Moreover, all the details may be replaced by technically equivalent elements.

In practice, it is obviously possible to envisage modifications and/or improvements, nevertheless within the scope of the following claims.

## Claims

1. Protective device for the bodywork of motorized vehicles, **characterized in that** it comprises at least one awning (1) made of material which can be wound up and provided at a first end (1a) with means (7) for rigid and removable fastening to the bodywork of a vehicle (3), and a roller (2), provided with means (8) for fastening to the bodywork of a vehicle (3), on which roller (2) the awning (1) is wound up at a second end (1b) thereof.

2. Device according to Claim 1, of the type which can be associated with a motorcycle, **characterized in that** it comprises a rear travel box (4) which can be rigidly fixed to the vehicle (3) and comprises fastening means (5) complementing the fastening means (8) of the roller (2), so as to fix stably the awning (1) to the vehicle (3).

3. Device according to Claim 1 or 2, **characterized in that** the fastening means (7) comprise a rapid-engagement mechanism (7a) complementing a similar mechanism (3a) fixed to the vehicle (3).

4. Device according to Claim 3, **characterized in that** the rapid-engagement mechanism (7a) acts as a grip for unwinding the awning (1).

5. Device according to Claim 1 or 2, **characterized in that** the fastening means (7) comprise an adhesive surface (7b) which can be associated with the vehicle (3).
